# EUROPEAN PATENT APPLICATION

(11) **EP 4 786 239 A1**
(43) Date of publication of application: **05.08.2026**
(21) Application number: 24903245.9
(22) Date of filing: 26.08.2024
(51) Int. Cl.: B60K 15/03, B60K 8/00, F17C 13/04, F17C 13/12

(54) **SAFETY DEVICE FOR HIGH-PRESSURE GAS TANK**

(30) Priority: 11.12.2023 JP 2023208130
(71) Applicant: Mitsubishi Fuso Truck and Bus Corporation, Nakahara-ku, Kawasaki-shi Kanagawa 2118522 (JP)
(72) Inventor: AMARASINGHE, Suwin Indula, Kawasaki-shi, Kanagawa 211-8522 (JP)
(74) Representative: Hofstetter, Schurack & Partner
(86) International application number: PCT/JP2024/030177
(87) International publication number: WO 2025/126582

(57) **Abstract**

A safety device (10) for a high-pressure gas tank (3) that receives therein high-pressure gas as fuel for a vehicle (2) includes: a safety valve (1) attached to the high-pressure gas tank (3); and a heat pipe (5) attached to the safety valve (1). The safety valve (1) discharges the high-pressure gas from an inside of the high-pressure gas (3) tank to an outside in response to a temperature rise. The heat pipe transfers heat by evaporation and condensation of a working fluid contained therein and by capillary action of a wick provided on an inner wall thereof.

## Description

### [Technical Field]

The present disclosure relates to a safety device for a high-pressure gas tank that receives therein high-pressure gas as fuel for a vehicle.

### [Background Art]

Conventionally, some vehicles travel using high-pressure gas as fuel. For example, fuel cell vehicles are known, which travel using electric power generated by a chemical reaction between hydrogen gas as high-pressure gas and oxygen (air). Such vehicles that use the high-pressure gas as fuel are equipped with high-pressure gas tanks that receive therein the high-pressure gas.

In general, the high-pressure gas tanks mounted on vehicles are provided with safety valves that discharge the high-pressure gas from the inside of the high-pressure gas tanks to the outside in response to a temperature rise. As one of such safety valves, for example, PTL 1 discloses a thermally operated overpressure prevention device that operates so as to discharge part of hydrogen (high-pressure gas) compressed and filled in a hydrogen tank (high-pressure gas tank) to the atmosphere in a short time when the internal temperature of the hydrogen tank becomes equal to or higher than a predetermined temperature.

### [Citation List]

### [Patent Literature]

[PTL 1]
JP 2022-88966 A

### [Summary of Invention]

### [Technical Problem]

However, since the safety valve as described above operates (opens) by heat, in the case of a temperature rise at a position away from the safety valve, there is a risk that the safety valve operates late or does not operate at all. Especially in a commercial vehicle such as a truck or a bus in which the high-pressure gas tank is large, even at the time of fire, for example, in the vicinity of the high-pressure gas tank, the firing position may be far from the mounting position of the safety valve, making it difficult to appropriately operate the safety valve.

To solve this problem, for example, it is conceivable that multiple safety valves are attached to three or more positions including both ends and the middle portion of the high-pressure gas tank, so as to be able to respond to a temperature rise at any of these positions. However, this causes an increase in the manufacturing cost as the number of the safety valves increases. In addition, in a vehicle provided with multiple high-pressure gas tanks arranged separately from each other, even when there is a temperature rise in the vicinity of one of the high-pressure gas tanks, to prevent secondary damage, it is desirable to operate the safety valve(s) at the other high-pressure gas tank(s) as well to discharge the high-pressure gas to the outside.

The present disclosure has been devised in view of the problems described above, and an object thereof is to appropriately operate a safety valve in a safety device for a high-pressure gas tank.

### [Solution to Problem]

The present disclosure has been made to solve at least a part of the above problems and can be realized as the following aspects or application examples.
(1) A safety device for a high-pressure gas tank according to the present aspect is for a high-pressure gas tank that receives therein high-pressure gas as fuel for a vehicle, and includes: a safety valve that is attached to the high-pressure gas tank and discharges the high-pressure gas from an inside of the high-pressure gas tank to an outside in response to a temperature rise; and a heat pipe that is connected to the safety valve and transfers heat by evaporation and condensation of a working fluid contained therein and by capillary action of a wick provided on an inner wall thereof.

According to the present aspect, since the heat pipe is connected to the safety valve that discharges the high-pressure gas from the inside of the high-pressure gas tank to the outside in response to a temperature rise, the heat can be transferred to the safety valve through the heat pipe that exhibits a thermal conductivity higher than that of stainless steel, copper, aluminum, and the like. Consequently, even in the event of fire, for example, at a position far from the safety valve, the heat is rapidly and efficiently transferred from the firing position to the safety valve through the heat pipe, and thus, the safety valve operates in response to a temperature rise and can appropriately discharge the high-pressure gas.

Therefore, the present aspect can operate the safety valve more appropriately. That is, since the heat pipe having an excellent thermal conductivity is provided, without an increase in the number of the safety valves, sensitivity to heat is increased over a wide range, and thus, a temperature rise can be transferred to the safety valve. Accordingly, the number of the safety valves is suppressed from increasing, which can suppress a cost increase. In addition, since the heat pipe is a heat transferring device for transferring heat to the safety valve and the high-pressure gas does not flow through the heat pipe, no leakage of the high-pressure gas occurs even when the heat pipe is deformed or damaged. Therefore, even when an impact is input in the event of, for example, a collision of the vehicle, leakage of the high-pressure gas can be inhibited.

(2) In the safety device for the high-pressure gas tank according to the present aspect: the high-pressure gas tank may have a middle portion in a cylindrical shape and a pair of ends formed on both sides of the middle portion and each in a hemispherical shape; the safety valve may be attached to at least one of the ends; and the heat pipe may include a main pipe extending along the middle portion from the safety valve attached to the end.

According to such a configuration, even at the time of a temperature rise at the middle portion of the high-pressure gas tank, the heat can be transferred to the safety valve through the main pipe. Therefore, even in a case where, for example, the safety valve is attached to at least one of the ends of the high-pressure gas tank, the safety valve can appropriately operate in the event of a temperature rise in the vicinity of the middle portion of the high-pressure gas tank. In other words, without any additional safety valves attached to the middle portion of the high-pressure gas tank, due to the main pipe, the safety valve attached to at least one of the ends of the high-pressure gas tank can operate in the event of a temperature rise in the vicinity of the middle portion of the high-pressure gas tank. Therefore, the high-pressure gas can be appropriately discharged from the high-pressure gas tank in the event of a temperature rise while a cost increase is suppressed.

(3) In the safety device for the high-pressure gas tank according to the present aspect: the high-pressure gas tank may be mounted on the vehicle in a posture in which a center of the middle portion extends horizontally; and the main pipe may extend downward from the safety valve attached to the end and further extend along the middle portion.

According to such a configuration, the main pipe can extend along the middle portion of the high-pressure gas tank at a position lower than that of the safety valve. According to such a main pipe, the working fluid (gas) evaporated by the heat in the vicinity of the middle portion of the high-pressure gas tank moves upward due to the characteristic of the heat pipe and can transfer the heat to the safety valve. That is, the heat transferring direction through the main pipe to the safety valve is directed upward, so that the heat can be transferred more quickly and efficiently to the safety valve through the main pipe. Therefore, at the time of a temperature rise in the vicinity of the middle portion of the horizontally arranged high-pressure gas tank in which the center of the middle portion extends horizontally, the safety valve can operate more appropriately.

(4) In the safety device for the high-pressure gas tank according to the present aspect: the high-pressure gas tank may be mounted on the vehicle in a posture in which a center of the middle portion extends vertically; the safety valve may be attached to the end on an upper side; and the main pipe may extend obliquely downward from the safety valve attached to the end and further extend along the middle portion.

According to such a configuration, the main pipe can extend along the middle portion of the high-pressure gas tank at a position lower than that of the safety valve. According to such a main pipe, since the heat transferring direction to the safety valve is directed upward as described above, the heat can be transferred to the safety valve more quickly and efficiently through the main pipe. Therefore, at the time of a temperature rise in the vicinity of the middle portion in the vertically arranged high-pressure gas tank in which the center of the middle portion extends vertically, the safety valve can operate more appropriately.

(5) In the safety device for the high-pressure gas tank according to the present aspect: the high-pressure gas tank may be installed behind a cab of the vehicle and outside in a vehicle width direction of a chassis frame; and the heat pipe may be provided in a space between the chassis frame and the high-pressure gas tank.

According to such a configuration, the heat pipe can be protected by the high-pressure gas tank against an impact input from outside in the vehicle width direction during, for example, a side collision. This can reduce the risk of damaging the heat pipe in the event of a side collision of the vehicle.

(6) In the safety device for the high-pressure gas tank according to the present aspect: the high-pressure gas tank may be installed between a cab and a rear body of the vehicle; and the heat pipe may be provided in a space between the rear body and the high-pressure gas tank.

According to such a configuration, the heat pipe can be protected by the high-pressure gas tank against an impact input from a front side during, for example, a front collision. This can reduce the risk of damaging the heat pipe in the event of a front collision of the vehicle.

(7) The safety device for the high-pressure gas tank according to the present aspect may include a plurality of the safety valves respectively attached to a plurality of the high-pressure gas tanks, and the heat pipe may include a common pipe connected in a thermally conductive manner to each of the safety valves.

According to such a configuration, the heat can be transferred through the common pipe to each of the safety valves attached to the multiple high-pressure gas tanks. Thus, even in the event of fire, for example, at a position far from some of the safety valves, the heat can be transferred from the firing position to each of the safety valves through the common pipe. As a result, each of the safety valves operates in response to a temperature rise and can appropriately discharge the high-pressure gas from the inside of each high-pressure gas tank to the outside. Therefore, in the vehicle equipped with the multiple high-pressure gas tanks, at the time of a temperature rise in the vicinity of one high-pressure gas tank, not only the safety valve attached to this high-pressure gas tank but also the safety valve(s) attached to the other high-pressure gas tank(s) can operate appropriately. Thus, secondary damage can be effectively prevented.

(8) In the safety device for the high-pressure gas tank according to the present aspect, the common pipe may extend along a gas supply pipe connected to the plurality of the high-pressure gas tanks to feed the high-pressure gas to a predetermined supply destination.

According to such a configuration, at the time of a temperature rise in the vicinity of the gas supply pipe, the heat can be transferred to each of the multiple safety valves through the common pipe. As a result, in the event of fire, for example, in the vicinity of the gas supply pipe, each of the safety valves operates in response to a temperature rise and can appropriately discharge the high-pressure gas from the inside of each high-pressure gas tank to the outside. Further, if the common pipe is provided along the existing gas supply pipe, the common pipe can be easily installed.

(9) In the safety device for the high-pressure gas tank according to the present aspect, the common pipe may extend along a vehicle height direction and may be connected in a thermally conductive manner to each of the safety valves respectively attached to the high-pressure gas tanks distributed in the vehicle height direction.

According to such a configuration, the common pipe can be appropriately applied to the high-pressure gas tanks distributed in the vehicle height direction. Thus, in the event of a temperature rise at any position in the vehicle height direction, the heat can be transferred to each of the safety valves through the common pipe. This enables each safety valve of the high-pressure gas tanks distributed in the vehicle height direction to operate more appropriately.

(10) In the safety device for the high-pressure gas tank according to the present aspect, the common pipe may extend along a vehicle width direction and may be connected in a thermally conductive manner to each of the safety valves respectively attached to the high-pressure gas tanks distributed in the vehicle width direction.

According to such a configuration, the common pipe can be appropriately applied to the high-pressure gas tanks distributed in the vehicle width direction. Thus, in the event of a temperature rise at any position in the vehicle width direction, the heat can be transferred to each of the safety valves through the common pipe. This enables each safety valve of the high-pressure gas tanks lined up in the vehicle width direction to operate more appropriately.

(11) In the safety device for the high-pressure gas tank according to the present aspect: the safety valve may include a sensor that opens a discharge port for discharging the high-pressure gas to the outside in response to a temperature rise, a housing that houses the sensor, and a first connector which is a hole or a channel formed in a portion of the housing adjacent to the sensor; and the heat pipe may be connected to the first connector.

According to such a configuration, the heat is easily transferred from the heat pipe to the sensor, so that the safety valve can operate more appropriately. In other words, since the heat pipe is connected directly to the housing of the safety valve, the heat can be favorably transferred from the heat pipe to the sensor via the housing. In addition, mere formation of a hole or a channel in the existing housing enables the heat pipe to be connected, so that the manufacturing cost can be reduced, and the number of the heat pipes can be flexibly increased or decreased.

(12) In the safety device for the high-pressure gas tank according to the present aspect, the safety valve may include a sensor that opens a discharge port for discharging the high-pressure gas to the outside in response to a temperature rise, and a housing that houses the sensor, the safety device may further include a collar that is formed of a material having a thermal conductivity higher than that of the housing and attached to the housing, and that includes a second connector which is a hole or a channel formed at a position adjacent to the sensor, and the heat pipe may be connected to the second connector.

According to such a configuration, the heat is easily transferred from the heat pipe to the sensor, so that the safety valve can operate more appropriately. In other words, since the heat pipe is connected to the housing via the collar having a thermal conductivity higher than that of the housing of the safety valve, the heat can be favorably transferred from the heat pipe to the sensor via the collar and the housing. In addition, mere attachment of the collar to the existing housing enables the heat pipe to be connected, so that the existing housing can be used without any modification, and the number of the heat pipes can be flexibly increased or decreased by using the collar which is a retrofit.

(13) The safety device for the high-pressure gas tank according to the present aspect may further include a protector that is formed in a plate with a plurality of holes or in a grid and that covers the heat pipe.

According to such a configuration, the heat pipe can be protected by the protector while the heat is transferable to the heat pipe from the surroundings. Therefore, even when an impact is input at the time of, for example, a collision of the vehicle, deformation and damage of the heat pipe can be suppressed. This enables the safety valve to operate more appropriately.

(14) In the safety device for the high-pressure gas tank according to the present aspect: the vehicle may be a fuel cell vehicle that drives a motor for traveling by electric power of a fuel cell; and the high-pressure gas tank may be a hydrogen tank that receives therein hydrogen gas as the high-pressure gas.

According to such a configuration, since the safety valve operates more appropriately as described above, the hydrogen gas can be appropriately discharged from the inside of the high-pressure gas tank to the outside. Therefore, an appropriate measure can be taken at the time of a temperature rise in the fuel cell vehicle.

### [Advantageous Effects of Invention]

According to the present disclosure, it is possible to appropriately operate a safety valve in a safety device for a high-pressure gas tank.

### [Brief Description of Drawings]

[Fig. 1]

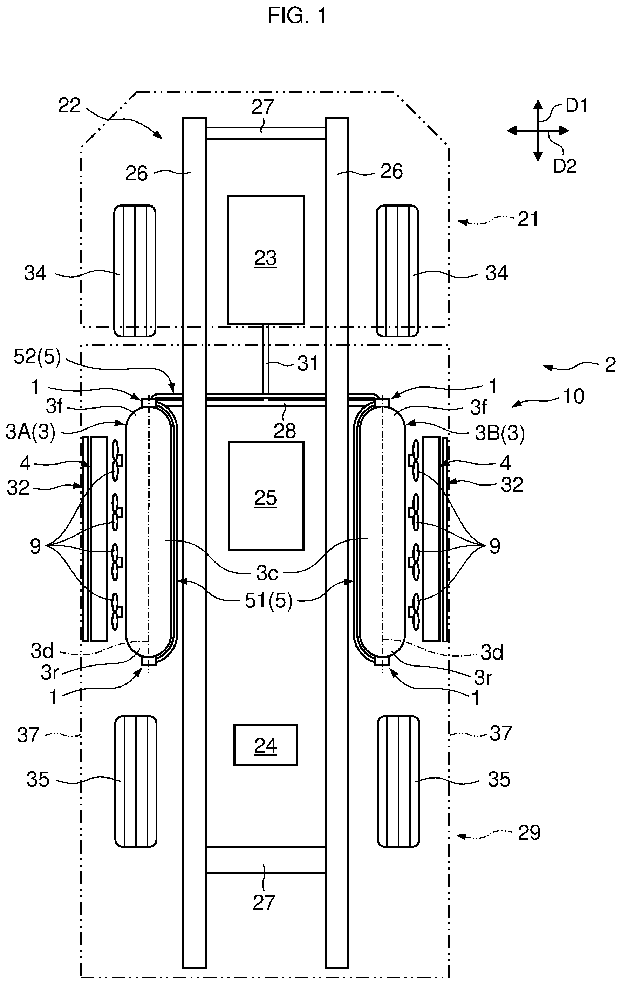

   FIG. 1 is a schematic top view of a vehicle that employs a safety device for a high-pressure gas tank according to an embodiment.
[FIG. 2]

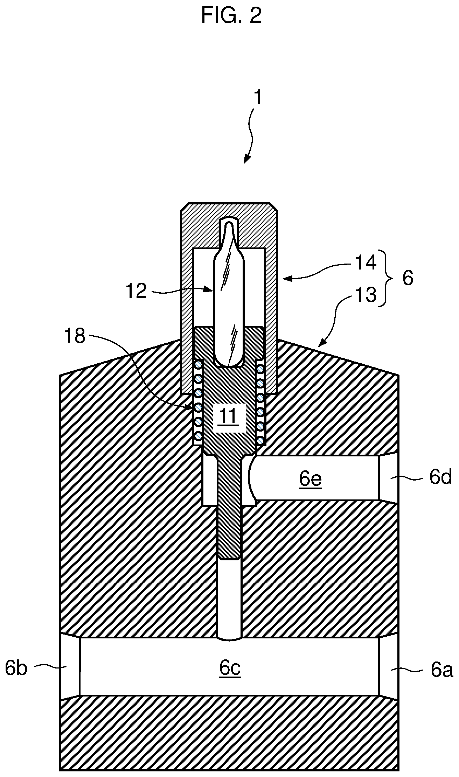

   FIG. 2 is a cross-sectional view illustrating an example of a safety valve included in the safety device of FIG. 1.
[FIG. 3]

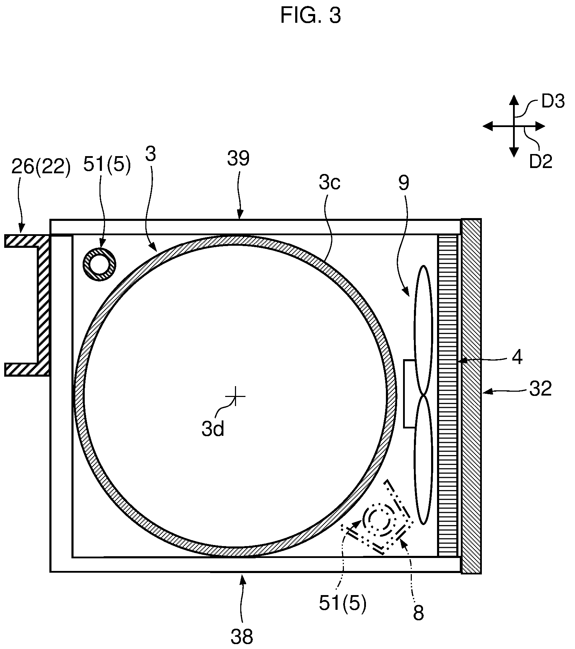

   FIG. 3 is a cross-sectional view schematically illustrating a structure around the high-pressure gas tank of FIG. 1.
[FIG. 4]

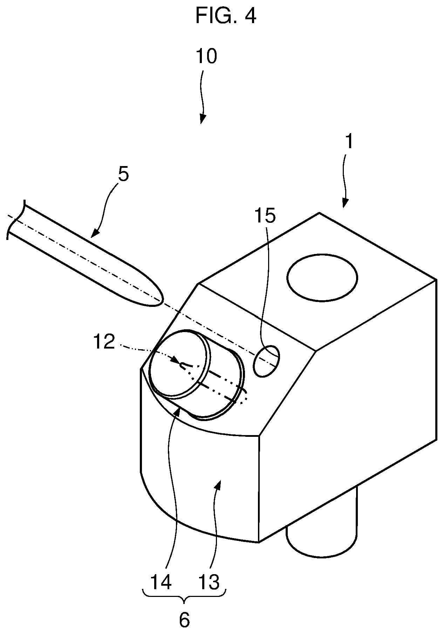

   FIG. 4 is a perspective view illustrating an example of a connection structure of the safety valve and a heat pipe included in the safety device of FIG. 1.
[FIG. 5]

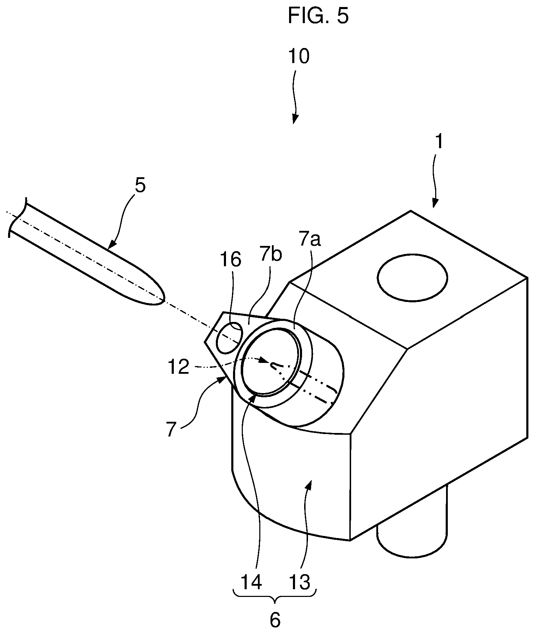

   FIG. 5 is a perspective view illustrating a different example of the connection structure of FIG. 4.
[FIG. 6]

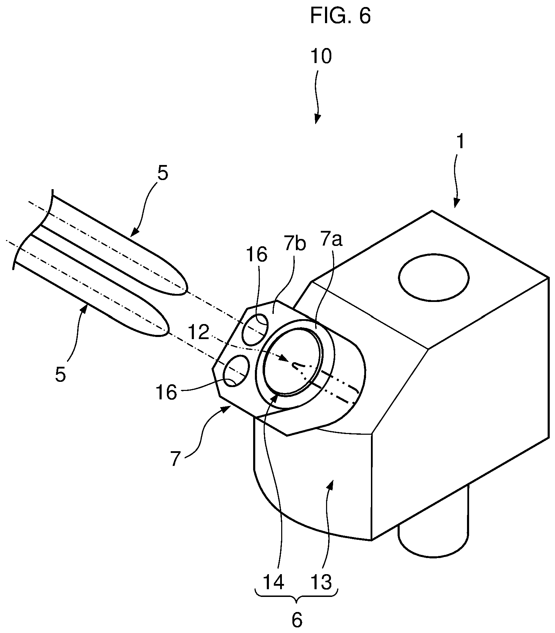

   FIG. 6 is a perspective view illustrating a modification of a collar in the connection structure of FIG. 5.
[FIG. 7]

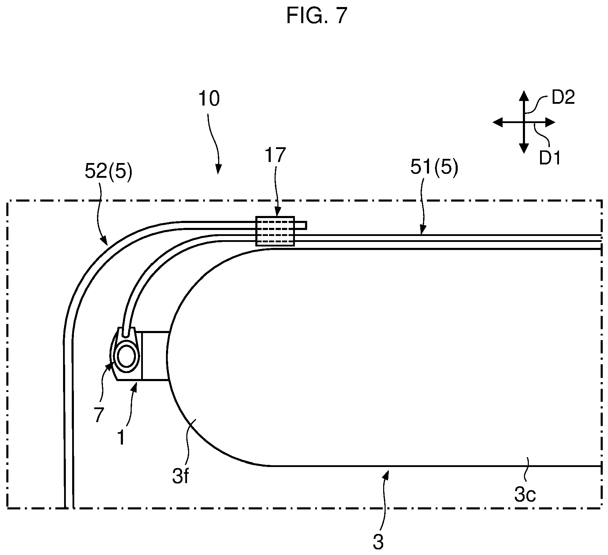

   FIG. 7 is a top view illustrating an example of a connection structure between heat pipes included in the safety device of FIG. 1.
[FIG. 8]

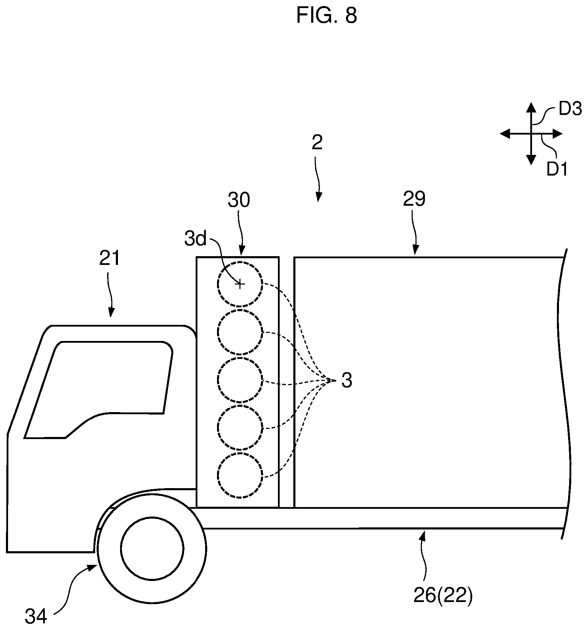

   FIG. 8 is a left side view of a main part of a vehicle that employs a safety device according to a first modification.
[FIG. 9]

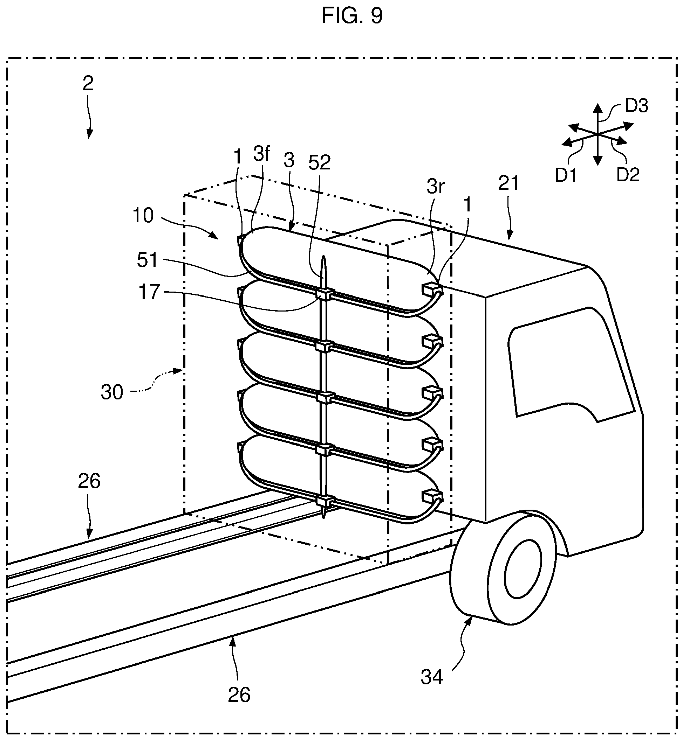

   FIG. 9 is a schematic perspective view obliquely seen from a rear right side of the main part of the vehicle of FIG. 8.
[FIG. 10]

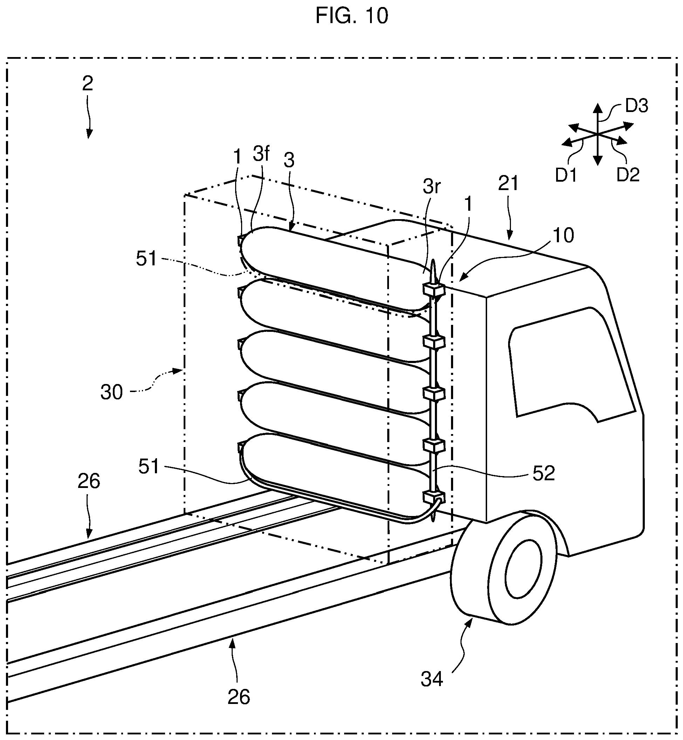

   FIG. 10 is a schematic perspective view (a figure corresponding to FIG. 9) obliquely seen from a rear right side of a main part of a vehicle that employs a safety device according to a second modification.
[FIG. 11]

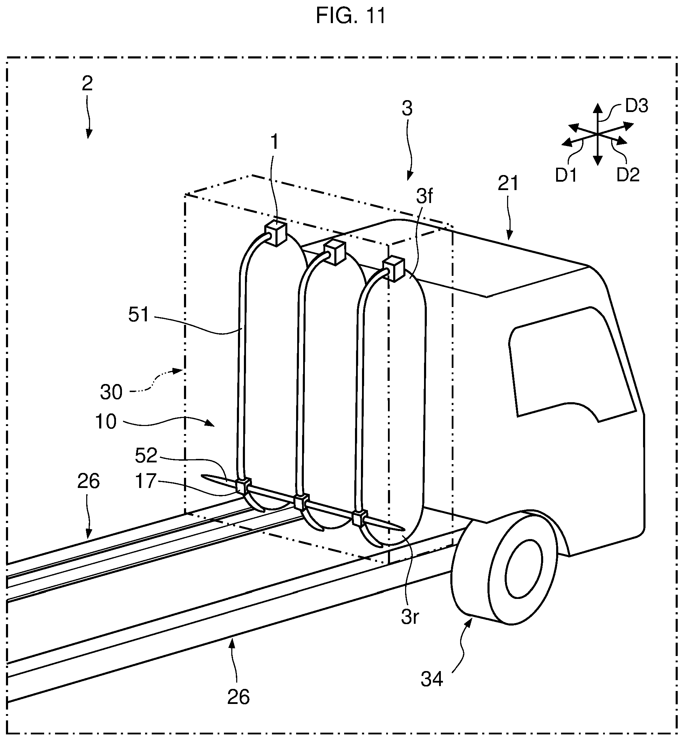

   FIG. 11 is a schematic perspective view (a figure corresponding to FIG. 9) obliquely seen from a rear right side of a main part of a vehicle that employs a safety device according to a third modification.

### [Description of Embodiments]

An embodiment (aspect and application example) of the present disclosure will now be described with reference to the drawings. The following embodiment is merely illustrative and there is no intention to eliminate the application of various modifications and techniques not explicitly described in the following embodiment. Each configuration of the following embodiment can be variously modified without departing from the gist thereof. Further, each configuration can be selected and omitted as necessary or can be appropriately combined.

### [1. Configuration]

### [1-1. Basic Configuration]

As illustrated in FIG. 1, a safety device 10 for a high-pressure gas tank (hereinafter, simply referred to as safety device 10) according to the present embodiment is applied to a high-pressure gas tank 3 (hereinafter, simply referred to as a tank 3) mounted on a vehicle 2. The vehicle 2 is, for example, a fuel cell vehicle that drives a motor 24 for traveling by electric power of a fuel cell 23. Specifically, the vehicle 2 includes a high-voltage battery 25 for storing electric power of the fuel cell 23 and drives the motor 24 with the electric power stored in the high-voltage battery 25.

Here, the vehicle 2 illustratively includes a cab 21 provided with a non-illustrated driver's seat, a rear body 29 disposed behind the cab 21, and a chassis frame 22 supporting the cab 21 and the rear body 29 from below. In FIG. 1, the cab 21 and the rear body 29 are both depicted by two-dot chain lines.

The chassis frame 22 of the present embodiment forms a ladder frame structure. Specifically, the chassis frame 22 has a pair of side rails 26 each extending in a vehicle length direction D1 (front-rear direction) and a plurality of cross members 27 (only two of which are illustrated in FIG. 1) each extending in a vehicle width direction D2 (left-right direction) to form a ladder shape. The pair of side rails 26 are spaced apart from each other in the vehicle width direction D2 and the cross members 27 each connect the pair of side rails 26 to each other. The rear body 29 is, for example, a cargo box. As such, the vehicle 2 can be a truck (fuel cell truck) that includes the rear body 29 serving as a cargo box.

The fuel cell 23 is a device that generates electric power by a chemical reaction between hydrogen and oxygen (air). The fuel cell 23 is disposed, for example, between the pair of side rails 26 below the cab 21. The fuel cell 23 is supplied with hydrogen gas from the tank 3 through a gas supply pipe 28 and a downstream pipe 31, which will be both described later. In other words, the fuel cell 23 is a predetermined supply destination to which the hydrogen gas is supplied from the tank 3.

The high-voltage battery 25 is disposed, for example, between the pair of side rails 26 behind the cab 21 and the fuel cell 23. The motor 24 is disposed, for example, between the pair of side rails 26 behind the high-voltage battery 25. The motor 24 is modularized with a non-illustrated inverter.

The tank 3 is a closed container that receives therein high-pressure gas as fuel for the vehicle 2. The tank 3 mounted in the vehicle 2 serving as the fuel cell vehicle is a hydrogen tank that receives therein hydrogen gas as the high-pressure gas. The present embodiment illustrates two (a plurality of) tanks 3 (a first tank 3A and a second tank 3B) installed behind the cab 21 and outside in the vehicle width direction D2 of the chassis frame 22.

The first tank 3A is provided outside in the vehicle width direction D2 of one (on the left side in FIG. 1) of the pair of side rails 26 each extending in the vehicle length direction D1 in the chassis frame 22 forming the ladder frame structure. The second tank 3B is provided outside in the vehicle width direction D2 of the other one (on the right side in FIG. 1) of the side rails 26. As described above, in the present embodiment, the first tank 3A is disposed to the left side of the left side rail 26 and the second tank 3B is disposed to the right side of the right side rail 26.

Each of the tanks 3 has, for example, a middle portion 3c in a cylindrical shape and a pair of ends 3f and 3r formed on both sides of the middle portion 3c and each in a hemispherical shape. The present embodiment illustrates the tanks 3 each of which serves as a horizontally arranged tank mounted in a posture in which the center 3d (axial center, hereinafter also referred to as tank center 3d) of the middle portion 3c extends horizontally. More specifically, the tanks 3 are each installed in a posture in which the tank center 3d extends along the vehicle length direction D1 in a similar manner to the side rails 26. Regarding each tank 3 arranged in such a posture, when distinguishing the pair of ends 3f and 3r located on both sides of the tank center 3d from each other, one on a front side is also referred to as a front end 3f and the other one on a rear side is also referred to as a rear end 3r.

The present embodiment illustrates the first tank 3A and the second tank 3B that both have the same shape and that are arranged in the same posture. However, the shape and the posture of each of the tanks 3 are not limited to the above example, meaning that the first tank 3A and the second tank 3B may have different shapes from each other or may be mounted in different postures from each other on the vehicle 2.

Each of the tanks 3 is disposed in a space between a front wheel 34 and a rear wheel 35 of the vehicle 2. Further, from the viewpoint of safety, each of the tanks 3 is disposed at a position at least a predetermined dimension inside in the vehicle width direction D2 from an outer surface 37 (for example, the outermost surface of the rear body 29) of the vehicle 2. Therefore, a space is provided over at least the predetermined dimension outside in the vehicle width direction D2 of each tank 3.

To the two tanks 3, the gas supply pipe 28 for feeding the high-pressure gas to the predetermined supply destination is connected. The gas supply pipe 28 of the present embodiment is piping for feeding the hydrogen gas from the tanks 3 to the fuel cells 23. The gas supply pipe 28 extends along the vehicle width direction D2 and connects the front ends 3f of the two tanks 3 to each other. The gas supply pipe 28 is connected to the fuel cell 23 via the downstream pipe 31. The downstream pipe 31 is provided with non-illustrated various devices such as a filter and a valve.

Fans 9 and heat exchangers 4 are arranged outside in the vehicle width direction D2 of each of the tanks 3. The fans 9 and the heat exchangers 4 are disposed in the spaces provided over at least the predetermined dimension outside in the vehicle width direction D2 of the tanks 3 as described above. In other words, the fans 9 and the heat exchangers 4 are installed by utilizing the dead spaces existing outside in the vehicle width direction D2 of the respective tanks 3.

The heat exchangers 4 are devices that perform heat exchange between coolant for cooling some equipment mounted on the vehicle 2 and the air. The fans 9 are blowers (so-called radiator fans) that guide air to the heat exchangers 4. FIG. 1 illustrates an example in which the heat exchangers 4 are arranged outside in the vehicle width direction D2 of the fans 9. However, the arrangement of the fans 9 and the heat exchangers 4 is not be limited thereto. The fans 9 may be provided in any arrangement as long as the fans 9 can guide air to the heat exchangers 4 and may be disposed, for example, in the arrangement opposite to the example of FIG. 1, that is, outside in the vehicle width direction D2 of the heat exchangers 4. Further, FIG. 1 illustrates an example in which a plurality of fans 9 are arranged along the vehicle length direction D1, but the number and sequence of the fans 9 are not limited thereto.

On the outside in the vehicle width direction D2 of the fans 9 and the heat exchangers 4, side covers 32 are attached to protect the fans 9 and the heat exchangers 4. The side covers 32 are each provided with non-illustrated slits for efficiently introducing the oncoming wind into the fans 9 and the heat exchangers 4 (inward in the vehicle width direction D2).

### [1-2. Main Part Configuration]

The safety device 10 according to the present embodiment includes a safety valve 1 attached to the tank 3 and a heat pipe 5 connected to the safety valve 1. Here, multiple safety valves 1 are illustratively attached one to each of the ends 3f and 3r of each tank 3, at positions on the tank center 3d. As such, for a relatively large tank 3, a plurality of safety valves 1 are preferably attached to multiple positions (in the present embodiment, each of the ends 3f and 3r) in the tank 3. However, at least one safety valve 1 may be attached to each tank 3 and, for example, one safety valve 1 may be attached to only one of the ends 3f and 3r (the front end 3f or the rear end 3r) of each tank 3.

Each of the safety valves 1 is a device that discharges the high-pressure gas from an inside of the tank 3 to an outside in response to a temperature rise. The safety valves 1 are also referred to as TPRDs (Thermal Pressure Relief Devices). The safety valves 1 attached to the front ends 3f of the respective tanks 3 are each provided as an OTV (On Tank Valve) which has various functions such as a non-illustrated temperature sensor, pressure sensor, and solenoid valve. On the other hand, the safety valves 1 attached to the rear ends 3r of the respective tanks 3 are each provided as, for example, a plug hat has only a function of the TPRD.

As illustrated in FIG. 2, the safety valve 1 of the present embodiment includes a cylinder 12 (sensor) made of glass and containing liquid, and a housing 6 accommodating the cylinder 12. The housing 6 has a body 13 forming a passage for the high-pressure gas and a cap 14 shaped in a bottomed cylinder that covers the cylinder 12 and attached to the body 13. The housing 6 is made of, for example, stainless steel. FIG. 2 omits the indication (hatching) of the cross section of the cylinder 12.

The body 13 of the housing 6 includes therein, an inlet port 6a communicating with the tank 3, an outlet port 6b for discharging the high-pressure gas toward the predetermined supply destination, and a gas passage 6c extending between the inlet port 6a and the outlet port 6b. The body 13 further includes therein, a discharge port 6d for discharging the high-pressure gas from the inside of the tank 3 to the outside of the vehicle 2 and a discharge passage 6e branching from the gas passage 6c and extending to the discharge port 6d. The gas supply pipe 28 illustrated in FIG. 1 is connected to the outlet port 6b of the present embodiment. To the discharge port 6d, a non-illustrated discharge pipe for discharging the high-pressure gas to the outside of the vehicle 2 is connected.

Inside the housing 6, a plunger 11 is provided in a reciprocatable manner within the discharge passage 6e. The plunger 11 is arranged in the discharge passage 6e and biased toward the cylinder 12 and the cap 14 by a spring 18 provided on the outer periphery of the plunger 11. When the plunger 11 is in such a biased state toward the cap 14 via the cylinder 12, the plunger 11 is fixed at a position to close the discharge passage 6e. Thus, in this state, the discharge port 6d is closed. In the state where the discharge port 6d is closed, the safety valve 1 is in a non-operated (closed) state.

On the other hand, when the cylinder 12 breaks as the liquid in the cylinder 12 expands in response to a temperature rise, the plunger 11 moves toward the cap 14 by a biasing force of the spring 18. Then, the plunger 11 moves to a position to open the discharge passage 6e. As a result, the discharge port 6d is opened, so that the high-pressure gas is discharged from the inside of the tank 3 to the outside through the discharge passage 6e and the discharge port 6d.

As described above, the cylinder 12 has a function of causing the plunger 11 to open the discharge passage 6e by moving the plunger 11 due to the deformation of the cylinder 12 in response to a temperature rise. In short, the cylinder 12 opens the discharge port 6d in response to a temperature rise. In the state where the discharge port 6d is opened, the safety valve 1 is in an operated (opened) state. Both the cylinder 12 and the cap 14 accommodating the cylinder 12 are provided to protrude from the body 13 such that the liquid in the cylinder 12 can appropriately receive heat from the surroundings (i.e., so as to increase sensitivity to a temperature rise in the surroundings).

As illustrated in FIGS. 1 and 3, the heat pipe 5 is a tubular heat transferring device. The heat pipe 5 transfers heat by evaporation and condensation of a working fluid contained therein and by capillary action of a wick(s) provided on an inner wall of the heat pipe 5. Specifically, in the heat pipe 5, liquid (pure water, alcohol, or the like) called the working fluid is hermetically enclosed within a hollow of a pipe formed of a relatively highly thermally conductive material (copper, aluminum, or the like), and capillary structure called the wick(s) is formed on an inner wall of the pipe.

In the heat pipe 5, if a portion serving as a high-temperature portion receives heat, the working fluid in the high-temperature portion evaporates to turn into gas and moves through the hollow of the pipe to another portion serving as a low-temperature portion. Then, the working fluid moved to the low-temperature portion condenses to turn back into liquid and is absorbed by the inner wall of the pipe due to the capillary action of the wick(s) to return to the high-temperature portion. The heat pipe 5 can rapidly transfer the heat by carrying the heat of the high-temperature portion to the low-temperature portion in this manner.

During the heat transfer in the heat pipe 5, the gas moving from the high-temperature portion to the low-temperature portion is likely to go upward, which is the opposite to the acting direction of gravity, and the liquid returning from the low-temperature portion to the high-temperature portion is likely to go downward, which corresponds to the acting direction of gravity. This means that the heat pipe 5 exhibits particularly good function (higher thermal conductivity) when transferring heat upward.

In general, the thermal conductivity is about 15 [W/m·K] in stainless steel, about 200 [W/m·K] in aluminum, and about 400 [W/m·K] in copper. In contrast, the thermal conductivity is about 4000 to 100000 [W/m·K] in the heat pipe 5. As such, the heat pipe 5 has a much higher thermal conductivity than that of stainless steel, aluminum, and copper.

As illustrated in FIG. 1, the heat pipe 5 of the present embodiment includes main pipes 51 extending along the respective tanks 3 and a common pipe 52 connected in a thermally conductive manner to each of the safety valves 1 of the two tanks 3. The common pipe 52 of the present embodiment extends along the gas supply pipe 28. That is, the common pipe 52 is laid along the vehicle width direction D2 so as to connect the safety valves 1 attached to the respective front ends 3f of the two tanks 3 to each other.

In contrast, each of the main pipes 51 extends along the middle portion 3c from each of the safety valves 1 attached to the ends 3f and 3r in each tank 3. More specifically, each of the main pipes 51 is curved in an arc along each of the hemispherical ends 3f and 3r from the safety valves 1 and further extends straight along the cylindrical middle portion 3c parallel to the tank center 3d. The main pipes 51 are provided close to the respective outer surfaces of the tanks 3 so as not to protrude from the tanks 3.

As illustrated in FIG. 3, the main pipe 51 of the present embodiment is provided in a space between the chassis frame 22 and the tank 3. Specifically, the main pipe 51 is provided, at the same height as that of the side rail 26, outside in the vehicle width direction D2 of the side rail 26, and inside in the vehicle width direction D2 of the tank center 3d. Here, the main pipe 51 is illustratively provided above (at a position higher than) the tank center 3d.

The main pipe 51 is fixed to, for example, a mount 38 and/or a stay 39 provided to fix the tank 3 to the chassis frame 22, via a non-illustrated clamp(s) or bracket(s). However, the structure for fixing the main pipe 51 is not limited this. The main pipe 51 of the present embodiment is provided in a space between the tank 3 and the mount 38 fixed to the side rail 26.

As illustrated by two-dot chain lines in FIG. 3, instead of or in addition to the position described above, the main pipe 51 may be provided in a space between the fan 9 (or the heat exchanger 4) and the tank 3. Specifically, the main pipe 51 may be laid along the tank 3 outside in the vehicle width direction D2 of the tank center 3d. The main pipe 51 illustrated by the two-dot chain lines in FIG. 3 is provided below (at a position lower than) the tank center 3d. The main pipe 51 provided as such extends downward from the safety valves 1 attached to the ends 3f and 3r and further extends along the middle portion 3c in each tank 3.

As illustrated by two-dot chain lines in FIG. 3, the safety device 10 may further include a protector 8 that covers the main pipe 51 (the heat pipe 5). The protector 8 is formed in a plate with a plurality of holes or in a grid so as not to inhibit the heat pipe 5 from receiving heat from the surrounding. Covering at least a part of the heat pipe 5, the protector 8 has a function of protecting the heat pipe 5 from, for example, a collision load in a collision of the vehicle 2. As described above, for the main pipe 51 provided outside in the vehicle width direction D2 of the tank center 3d, the protector 8 may be provided so as to cover the main pipe 51 from outside in the vehicle width direction D2 to ensure the protectability against a load input from outside in the vehicle width direction D2.

As illustrated in FIG. 4, as a connection structure between the safety valve 1 and the heat pipe 5, the safety valve 1 may further include a housing hole 15 (first connector) formed in the housing 6. The housing hole 15 illustrated in FIG. 4 is a hole formed in a portion adjacent to the cylinder 12 in the housing 6. Here, an example of the housing hole 15 is formed in the body 13 of the housing 6, at a portion near the cap 14. Although the safety valves 1 illustrated in FIG. 4 and FIGS. 5 to 7 to be described later differ in the shape of the body 13 from the one illustrated in FIG. 2, the essential functional elements (the plunger 11, the cylinder 12, and the like) are configured similar.

The heat pipe 5 is connected to the housing hole 15. Specifically, the heat pipe 5 is fixed in contact with a wall surface defining the housing hole 15 in the body 13. This allows the heat received by the heat pipe 5 to be transferred to the cylinder 12 via the housing 6. In order to enhance such a thermal conductivity from the heat pipe 5 to the cylinder 12, it is preferable to form the housing hole 15 at a position as close to the cylinder 12 as possible and to secure a large contact area between the heat pipe 5 and the housing 6.

As an alternative or in addition to the connection structure illustrated in FIG. 4, the safety device 10 may include, as illustrated in FIG. 5, a collar 7 attached to the housing 6. The collar 7 is formed of a material having a thermal conductivity higher than that of the housing 6. For example, if the housing 6 is made of stainless steel, the collar 7 may be made of copper or aluminum. FIG. 5 illustrates the collar 7 attached to the cap 14 of the housing 6.

The collar 7 includes an attachment portion 7a in a ring shape fitted to the cap 14 of the housing 6, an arm 7b extending radially outward from the attachment portion 7a, and a collar hole 16 (second connector) formed in the arm 7b. The collar hole 16 illustrated in FIG. 5 is a hole formed in the collar 7, at a portion adjacent to the cylinder 12. Here, one collar hole 16 is illustratively formed in the substantially trapezoidal arm 7b provided in the collar 7.

The heat pipe 5 is connected to the collar hole 16. Specifically, the heat pipe 5 is fixed in contact with a wall surface defining the collar hole 16 in the collar 7. This allows the heat received by the heat pipe 5 to be transferred to the cylinder 12 via the collar 7 and the housing 6. In order to enhance such a thermal conductivity from the heat pipe 5 to the cylinder 12, it is preferable to form the collar hole 16 at a position as close to the cylinder 12 as possible and to secure large contact areas between the heat pipe 5 and the collar 7 and between the collar 7 and the housing 6. The housing hole 15 and the collar hole 16 are not limited to the above-described holes. The housing hole 15 and the collar hole 16 may have various shapes to which the heat pipe 5 is connectable and may alternatively be, for example, a channel into which the heat pipe 5 is fittable.

In a case where a plurality of heat pipes 5 are connected to one safety valve 1, for example, as illustrated in FIG. 6, the arm 7b of the collar 7 may be enlarged to form a plurality of collar holes 16 therein. As described above, if the collar 7 has the plurality of collar holes 16, a plurality of the main pipes 51 and/or the combination of the main pipe(s) 51 and the common pipe(s) 52 can be connected to the one safety valve 1. Alternatively or additionally, a plurality of housing holes 15 may be formed in the housing 6 to allow a plurality of heat pipes 5 to be connected to one safety valve 1.

In a case where the housing 6 has a low thermal conductivity, a connecting member (interface) for transferring heat may be provided between the housing hole 15 and the cylinder 12 or between the collar 7 and the cylinder 12. Such a connecting member is formed of a material having a thermal conductivity higher than that of the housing 6 in the same manner as the collar 7.

Alternatively, as illustrated in FIG. 7, a plurality of heat pipes 5 may be coupled to each other by a thermally conductive mounting block 17. The mounting block 17 is formed of a relatively highly thermally conductive material (copper, aluminum, or the like). FIG. 7 illustrates an example in which the main pipe 51 and the common pipe 52 are connected to each other by the mounting block 17 in the vicinity of the border between the front end 3f and the middle portion 3c of the tank 3. In this case, the common pipe 52 is connected in a thermally conductive manner to the safety valve 1 via a part of the main pipe 51 and the mounting block 17. As such, the common pipe 52 may be connected to the safety valve 1 at least in a thermally conductive manner and does not have to be directly connected to the safety valve 1.

### [1-3. Modification]

The mounting posture and the mounting position of the tanks 3 in the vehicle 2 are not limited to the above example. For example, as illustrated in FIGS. 8 to 11 as modifications, the tanks 3 may be installed between the cab 21 and the rear body 29 of the vehicle 2. In FIGS. 8 to 11, the elements which are the same as or corresponding to those described above are denoted by the same reference numerals and repetitious description thereof will be omitted.

The vehicle 2 of each modification includes a tank box 30 disposed along a rear surface of the cab 21. A plurality of tanks 3 is accommodated in the tank box 30. In the first modification illustrated in FIG. 8, horizontally arranged tanks 3 are illustratively installed in postures in which the tank centers 3d (only one of which is indicated by a reference numeral in FIG. 8) extend horizontally. More specifically, each of the tanks 3 of the first modification is mounted on the vehicle 2, in a posture in which the tank center 3d extends along the vehicle width direction D2. The plurality of tanks 3 are distributed in the vehicle height direction D3 inside the tank box 30.

The heat pipe 5 of each modification is provided in a space between the rear body 29 and the tanks 3. As illustrated in FIG. 9, each of the main pipes 51 of the first modification extends downward and rearward from the respective safety valves 1 attached to the ends 3f and 3r and further extends along the middle portion 3c in each tank 3. In this manner, the main pipes 51 are provided below (at positions lower than) and behind (closer to the rear body 29 than) the tank centers 3d. FIGS. 9 to FIG. 11 each illustrate the tank box 30 in a transparent state (by two-dot chain lines), omitting the rear body 29 and other structures unnecessary for the description and assigning reference numerals to only a part of plural configurations.

As illustrated in FIG. 9, the common pipe 52 of the first modification extends along the vehicle height direction D3 in response to the plurality of tanks 3 distributed in the vehicle height direction D3. The common pipe 52 is connected to each of the main pipes 51 via the mounting blocks 17. Accordingly, the common pipe 52 is connected in a thermally conductive manner to each of the plurality of safety valves 1 attached to the plurality of tanks 3 distributed in the vehicle height direction D3 via the mounting blocks 17 and the main pipes 51. The common pipe 52 of the present modification preferably extends, so as to cover the entire range of the plurality of tanks 3 in the vehicle height direction D3, from a height position equal to or lower than a lower end of the tank 3 located at the bottom to a height position equal to or higher than an upper end of the tank 3 located at the top.

FIG. 9 illustrates one common pipe 52 provided at a substantial center in the vehicle width direction D2 of each tank 3 and behind (closer to the rear body 29 than) the tank centers 3d. However, the position and the number of the common pipes 52 are not limited thereto. For example, the common pipe 52 may be provided at a position shifted to either left or right side of each tank 3, or a plurality of common pipes 52 may be distributed at intervals in the vehicle width direction D2.

As illustrated in FIG. 10 as the second modification, the common pipe 52 may be directly connected to the safety valves 1 attached to the respective tanks 3. Here, as an example, one common pipe 52 is directly connected to each of the safety valves 1 attached to one ends 3r (right ends 3r in FIG. 10) of the respective tanks 3. An alternative or additional common pipe 52 may be provided, which is directly connected to each of the safety valves 1 attached to the other ends 3f (left ends 3f in FIG. 10) of the respective tanks 3. The position of the common pipe 52 as such can be changed as appropriate in accordance with the positions of the safety valves 1.

When the common pipe 52 is directly connected to the safety valves 1 as in the case of the present modification, the main pipes 51 may be partially or entirely omitted. For example, as illustrated in FIG. 10, the main pipe 51 may be provided only for the tank 3 located at the bottom. In addition to this, for example, as indicated by two-dot chain lines in FIG. 10, a main pipe 51 may be provided for the tank 3 located at the top.

As illustrated in FIG. 11 as the third modification, the tanks 3 mounted on the vehicle 2 may be vertically arranged tanks installed in postures in which the tank centers 3d extend vertically (in the vehicle height direction D3). Regarding each of the tanks 3 arranged in such postures, when the pair of ends 3f and 3r are distinguished from each other, one on the upper side is also referred to as an upper end 3f and the other one on the lower side is also referred to as a lower end 3r. FIG. 11 illustrates an example in which a plurality of tanks 3 serving as the vertically arranged tanks are distributed in the vehicle width direction D2 inside the tank box 30.

In the present modification, the safety valves 1 are attached only to the upper ends 3f of the respective tanks 3. The main pipes 51 extend obliquely downward (rearward and downward in the present modification) from the respective safety valves 1 attached to the upper ends 3f and further extend along the middle portions 3c in the respective tanks 3. The main pipes 51 extend to the vicinity of the lower ends 3r where the safety valves 1 are not attached in the tanks 3. Here, the main pipes 51 are illustratively provided behind (closer to the rear body 29 than) the tank centers 3d.

The common pipe 52 of the third modification extends along the vehicle width direction D2 in response to the plurality of tanks 3 distributed in the vehicle width direction D2 and is connected to each of the main pipes 51 via the mounting blocks 17. Thus, the common pipe 52 is connected in a thermally conductive manner to each of the safety valves 1 attached to the respective tanks 3 distributed in the vehicle width direction D2 via the main pipes 51.

FIG. 11 illustrates one common pipe 52 provided slightly above (at a position higher than) the lower ends 3r of the tanks 3. However, the common pipe 52 may be provided, for example, at a substantial center in the vehicle height direction D3 of each main pipe 51, or a plurality of common pipes 52 may be provided at intervals in the vehicle height direction D3. It is preferable also in this modification that the common pipe 52 extends, so as to cover the entire range of the plurality of tanks 3 in the vehicle width direction D2, over a length equal to or longer than the dimension between left and right ends of the tanks 3.

### [2. Actions and Effects]

(1) According to the safety device 10 described above, since the heat pipe 5 is connected to the safety valve 1 that discharges the high-pressure gas from the inside of the tank 3 to the outside in response to a temperature rise, the heat can be transmitted to the safety valve 1 through the heat pipe 5 that exhibits a higher thermal conductivity than that of stainless steel, copper, aluminum, and the like. Consequently, even in the event of fire, for example, at a position far from the safety valve 1, the heat is rapidly and efficiently transferred from the firing position to the safety valve 1 through the heat pipe 5, and thus, the safety valve 1 operates in response to a temperature rise and can appropriately discharge the high-pressure gas.
   Therefore, the safety device 10 can operate the safety valve 1 more appropriately. That is, since the heat pipe 5 having an excellent thermal conductivity is provided, without an increase in the number of the safety valves 1, sensitivity to heat is increased over a wide range, and thus, a temperature rise can be transferred to the safety valve 1. Accordingly, the number of safety valves 1 is suppressed from increasing, which can suppress a cost increase. In addition, since the heat pipe 5 is a heat transferring device for transferring heat to the safety valve 1 and the high-pressure gas does not flow through the heat pipe 5, no leakage of the high-pressure gas occurs even when the heat pipe 5 is deformed or damaged. Therefore, even when an impact is input in the event of, for example, a collision of the vehicle 2, leakage of the high-pressure gas can be inhibited.
(2) According to the main pipe 51 extending along the cylindrical middle portion 3c from the safety valve 1 attached to at least one of the hemispherical ends 3f and 3r of the tank 3, even at the time of a temperature rise at the middle portion 3c of the tank 3, the heat can be transferred to the safety valve 1 through the main pipe 51. Therefore, even in a case where, for example, the safety valve 1 is attached to at least one of the ends 3f and 3r of the tank 3, the safety valve 1 can appropriately operate in the event of a temperature rise in the vicinity of the middle portion 3c of the tank 3. In other words, without any additional safety valves 1 attached to the middle portion 3c of the tank 3, due to the main pipe 51, the safety valve 1 attached to at least one of the ends 3f and 3r of the tank 3 can operate in the event of a temperature rise in the vicinity of the middle portion 3c of the tank 3. Therefore, the high-pressure gas can be appropriately discharged from the tank 3 in the event of a temperature rise while a cost increase is suppressed.
(3) As illustrated in, for example, FIGS. 9 and 10, if the main pipe 51 extends downward from the safety valve 1 attached to the end 3f or 3r and further extends along the middle portion 3c in the horizontally arranged tank 3, the main pipe 51 can extend along the middle portion 3c of the tank 3 at a position lower than that of the safety valve 1. According to such a main pipe 51, the working fluid (gas) evaporated by the heat in the vicinity of the middle portion 3c of the tank 3 moves upward due to the characteristic of the heat pipe 5 and can transfer the heat to the safety valve 1. That is, the heat transferring direction through the main pipe 51 to the safety valve 1 is directed upward, so that the heat can be transferred more quickly and efficiently to the safety valve 1 through the main pipe 51. Therefore, at the time of a temperature rise in the vicinity of the middle portion 3c of the horizontally arranged tank 3, the safety valve 1 can operate more appropriately.
(4) As illustrated in FIG. 11, if the main pipe 51 extends obliquely downward from the safety valve 1 attached to the upper end 3f and further extends along the middle portion 3c in the vertically arranged tank 3, the main pipe 51 can extend along the middle portion 3c of the tank 3 at a position lower than that of the safety valve 1. According to such a main pipe 51, since the heat transferring direction to the safety valve 1 is directed upward as described above, the heat can be transferred to the safety valve 1 more quickly and efficiently through the main pipe 51. Therefore, at the time of a temperature rise in the vicinity of the middle portion 3c of the vertically arranged tank 3, the safety valve 1 can operate more appropriately.
   Further, if the main pipe 51 extends to the vicinity of the lower end 3r of the vertically arranged tank 3, without any safety valve 1 on the lower end 3r, at the time of a temperature rise in the vicinity of the lower end 3r, the heat can be transferred through the main pipe 51 to the safety valve 1 attached to the upper end 3f. Thus, the number of safety valves 1 is suppressed from increasing, which can further suppress a cost increase.
(5) As illustrated in FIG. 3, if the heat pipe 5 is provided in the space between the chassis frame 22 and the tank 3 disposed outside in the vehicle width direction D2 of the chassis frame 22, the heat pipe 5 can be protected by the tank 3 against an impact input from outside in the vehicle width direction D2 during, for example, a side collision. This can reduce the risk of damaging of the heat pipe 5 in the event of a side collision of the vehicle 2.
(6) As illustrated in FIGS. 8 to 11, if the heat pipe 5 is provided in the space between the rear body 29 and the tank 3 installed between the cab 21 and the rear body 29, the heat pipe 5 can be protected by the tank 3 against an impact input from a front side during, for example, a front collision. This can reduce the risk of damaging the heat pipe 5 in the event of a front collision of the vehicle 2.
(7) According to the common pipe 52 connected in a thermally conductive manner to each of the safety valves 1 attached to the plurality of tanks 3, the heat can be transferred through the common pipe 52 to each of the safety valves 1 attached to the multiple tanks 3. Thus, even in the event of fire, for example, at a position far from some of the safety valves 1, the heat can be transferred from the firing position to each of the safety valves 1 through the common pipe 52. As a result, each of the safety valves 1 operates in response to a temperature rise and can appropriately discharge the high-pressure gas from the inside of each tank 3 to the outside. Therefore, in the vehicle 2 equipped with the multiple tanks 3, at the time of a temperature rise in the vicinity of one tank 3, not only the safety valve 1 attached to this tank 3 but also the safety valve(s) 1 attached to the other tank(s) 3 can operate more appropriately. Thus, secondary damage can be effectively prevented.
   As illustrated in FIG. 9, if the common pipe 52 is connected to the safety valve 1 via the main pipe 51, the heat can be transferred from the common pipe 52 to the safety valve 1 through the main pipe 51, which obviates the need to directly connect the common pipe 52 to the safety valve 1 and can thus increase the degree of freedom in the layout of the common pipe 52. On the other hand, as illustrated in FIG. 10, if the common pipe 52 is directly connected to the safety valve 1, the heat is more quickly and reliably transferred from the common pipe 52 to the safety valve 1, so that the safety valve 1 can operate more appropriately.
(8) As illustrated in FIG. 1, if the common pipe 52 extends along the gas supply pipe 28 provided for feeding the high-pressure gas to the predetermined supply destination, at the time of a temperature rise in the vicinity of the gas supply pipe 28, the heat can be transferred to each of the safety valves 1 through the common pipe 52. As a result, in the event of fire, for example, in the vicinity of the gas supply pipe 28, each of the safety valves 1 operates in response to a temperature rise and can appropriately discharge the high-pressure gas from the inside of each tank 3 to the outside. Further, if the common pipe 52 is provided along the existing gas supply pipe 28, the common pipe 52 can be easily installed.
(9) As illustrated in FIGS. 9 and 10, if the common pipe 52 extending along the vehicle height direction D3 is connected in a thermally conductive manner to each of the safety valves 1 respectively attached to the tanks 3 distributed in the vehicle height direction D3, the common pipe 52 can be appropriately applied to the tanks 3 distributed in the vehicle height direction D3. Thus, in the event of a temperature rise at any position in the vehicle height direction D3, the heat can be transferred to each of the safety valves 1 through the common pipe 52. This enables each safety valve 1 of the tanks 3 distributed in the vehicle height direction D3 to operate more appropriately.
(10) As illustrated in FIG. 11, if the common pipe 52 extending along the vehicle width direction D2 is connected in a thermally conductive manner to each of the safety valves 1 respectively attached to the tanks 3 distributed in the vehicle width direction D2, the common pipe 52 can be appropriately applied to the tanks 3 distributed in the vehicle width direction D2. Thus, in the event of a temperature rise at any position in the vehicle width direction D2, the heat can be transferred to each of the safety valves 1 through the common pipe 52. This enables each safety valves 1 of the tanks 3 lined up in the vehicle width direction D2 to operate more appropriately.
(11) As illustrated in Fig.4, if the heat pipe 5 is connected to the housing hole 15 adjacent to the cylinder 12 that opens the discharge port 6d in response to a temperature rise in the safety valve 1, the heat is easily transferred from the heat pipe 5 to the cylinder 12, so that the safety valve 1 can operate more appropriately. In other words, since the heat pipe 5 is connected directly to the housing 6 of the safety valve 1, the heat can be favorably transferred from the heat pipe 5 to the cylinder 12 via the housing 6. In addition, mere formation of a hole or a channel in the existing housing 6 enables the heat pipe 5 to be connected, so that the manufacturing cost can be reduced, and the number of the heat pipes 5 can be flexibly increased or decreased.
(12) As illustrated in FIGS. 5 and 6, if the heat pipe 5 is connected to the collar hole 16 adjacent to the cylinder 12 in the collar 7 attached to the housing 6 of the safety valve 1, the heat is easily transferred from the heat pipe 5 to the cylinder 12, so that the safety valve 1 can operate more appropriately. In other words, since the heat pipe 5 is connected to the housing 6 via the collar 7 having a thermal conductivity higher than that of the housing 6 of the safety valve 1, the heat can be favorably transferred from the heat pipe 5 to the cylinder 12 via the collar 7 and the housing 6. In addition, mere attachment of the collar 7 to the existing housing 6 enables the heat pipe 5 to be connected, so that the existing housing 6 can be used without any modification, and the number of the heat pipes 5 can be flexibly increased or decreased by using the collar 7 which is a retrofit.
(13) As illustrated in FIG. 3, if the protector 8 formed in a plate with multiple holes or in a grid covers the heat pipe 5, the heat pipe 5 can be protected by the protector 8 while the heat is transferable to the heat pipe 5 from the surroundings. Therefore, even when an impact is input at the time of, for example, a collision of the vehicle 2, deformation and damage of the heat pipe 5 can be suppressed. This enables the safety valve 1 to operate more appropriately.
(14) If the safety device 10 is applied to the tank 3 serving as the hydrogen tank installed in the vehicle 2 serving as the fuel cell vehicle, since the safety valve 1 operates more appropriately as described above, the hydrogen gas can be appropriately discharged from the inside of the tank 3 to the outside. Therefore, an appropriate measure can be taken at the time of a temperature rise in the fuel cell vehicle.

### [3. Miscellaneous]

The configurations of the above-described embodiment and modifications can be combined as appropriate. For example, in each of the modifications illustrated in FIGS. 8 to 11, the common pipe 52 may extend along a non-illustrated gas supply pipe connected to the plurality of tanks 3. Further, in each of the modifications illustrated in FIGS. 8 to 11, the connection structure between the safety valve 1 and the heat pipe 5 may adopt the collar 7 of FIGS. 5 to 6.

The shape, the number, and the arrangement of the tanks 3 installed in the vehicle 2 should not be limited to the above examples. Only one tank 3 may be installed in the vehicle 2, for example. In this case, the common pipe 52 is omitted. The high-pressure gas contained in the tank 3 may be any type of fuel for the vehicle 2 and should not be limited to hydrogen gas. This means that the vehicle 2 is not limited to the fuel cell vehicle.

The safety valve 1 may be attached to a portion other than the ends 3f and 3r of the tank 3, or may be attached to only one of the ends 3f and 3r. The specific structure of the safety valve 1 is not limited to the one illustrated in FIG. 2. For example, the sensor that opens the discharge port 6d in response to a temperature rise in the safety valve 1 may be formed of a member other than the cylinder 12 described above.

The shape and arrangement of the heat pipe 5 are not limited to the above-described examples, and may be appropriately modified according to the shape and arrangement of the tank(s) 3, the structure and arrangement of the safety valve(s) 1, and the like. For example, the main pipe 51 may extend upward or horizontally from the safety valve 1 attached to the end(s) 3f or/and 3r and may further extend along the middle portion 3c of the tank 3. The common pipe 52 may extend along, instead of the gas supply pipe 28, a vent pipe for venting the high-pressure gas discharged from the safety valve 1 to the outside of the vehicle 2. The safety device 10 may omit either the main pipe 51 or the common pipe 52.

The configuration of the collar 7 described above is an example. The collar 7 may be formed in any appropriate shape depending on the shape of the housing 6 of the safety valve 1, the position of the sensor, or the like. The collar 7 may also be attached to a portion of the housing 6 other than the cap 14.

The protector 8 illustrated in FIG. 3 is applicable to various heat pipes 5. For example, the protector 8 may be provided so as to cover the common pipe 52. The protector 8 may be applied to the various heat pipes 5 illustrated in FIGS. 9 to 11. Further, the protector 8 may be applied to the heat pipe 5 only at a part to which an impact may be input.

### [4. Appendix]

Appendices will be disclosed in relation to the above embodiment.

### (Appendix 1)

A safety device for a high-pressure gas tank that receives therein high-pressure gas as fuel for a vehicle, the safety device comprising:
a safety valve that is attached to the high-pressure gas tank and discharges the high-pressure gas from an inside of the high-pressure gas tank to an outside in response to a temperature rise; and
a heat pipe that is connected to the safety valve and transfers heat by evaporation and condensation of a working fluid contained therein and by capillary action of a wick provided on an inner wall thereof.

### (Appendix 2)

The safety device for the high-pressure gas tank according to appendix 1, wherein:
the high-pressure gas tank has a middle portion in a cylindrical shape and a pair of ends formed on both sides of the middle portion and each in a hemispherical shape;
the safety valve is attached to at least one of the ends; and
the heat pipe includes a main pipe extending along the middle portion from the safety valve attached to the end.

### (Appendix 3)

The safety device for the high-pressure gas tank according to appendix 2, wherein:
the high-pressure gas tank is mounted on the vehicle in a posture in which a center of the middle portion extends horizontally; and
the main pipe extends downward from the safety valve attached to the end and further extends along the middle portion.

### (Appendix 4)

The safety device for the high-pressure gas tank according to appendix 2, wherein:
the high-pressure gas tank is mounted on the vehicle in a posture in which a center of the middle portion extends vertically;
the safety valve is attached to the end on an upper side; and
the main pipe extends obliquely downward from the safety valve attached to the end and further extends along the middle portion.

### (Appendix 5)

The safety device for the high-pressure gas tank according to any one of appendices 1 to 4, wherein:
the high-pressure gas tank is installed behind a cab of the vehicle and outside in a vehicle width direction of a chassis frame; and
the heat pipe is provided in a space between the chassis frame and the high-pressure gas tank.

### (Appendix 6)

The safety device for the high-pressure gas tank according to any one of appendices 1 to 4, wherein:
the high-pressure gas tank is installed between a cab and a rear body of the vehicle; and
the heat pipe is provided in a space between the rear body and the high-pressure gas tank.

### (Appendix 7)

The safety device for the high-pressure gas tank according to any one of appendices 1 to 6, comprising a plurality of the safety valves respectively attached to a plurality of the high-pressure gas tanks, wherein
the heat pipe includes a common pipe connected in a thermally conductive manner to each of the safety valves.

### (Appendix 8)

The safety device for the high-pressure gas tank according to appendix 7, wherein the common pipe extends along a gas supply pipe connected to the plurality of the high-pressure gas tanks to feed the high-pressure gas to a predetermined supply destination.

### (Appendix 9)

The safety device for the high-pressure gas tank according to appendix 7 or 8, wherein the common pipe extends along a vehicle height direction and is connected in a thermally conductive manner to each of the safety valves respectively attached to the high-pressure gas tanks distributed in the vehicle height direction.

### (Appendix 10)

The safety device for the high-pressure gas tank according to appendix 7 or 8, wherein the common pipe extends along a vehicle width direction and is connected in a thermally conductive manner to each of the safety valves respectively attached to the high-pressure gas tanks distributed in the vehicle width direction.

### (Appendix 11)

The safety device for the high-pressure gas tank according to any one of appendices 1 to 10, wherein:
the safety valve includes a sensor that opens a discharge port for discharging the high-pressure gas to the outside in response to a temperature rise, a housing that houses the sensor, and a first connector which is a hole or a channel formed in a portion of the housing adjacent to the sensor; and
the heat pipe is connected to the first connector.

### (Appendix 12)

The safety device for the high-pressure gas tank according to any one of appendices 1 to 10, wherein
the safety valve includes a sensor that opens a discharge port for discharging the high-pressure gas to the outside in response to a temperature rise, and a housing that houses the sensor,
the safety device further comprising a collar that is attached to the housing and formed of a material having a thermal conductivity higher than that of the housing, and that includes a second connector which is a hole or a channel formed at a position adjacent to the sensor, wherein
the heat pipe is connected to the second connector.

### (Appendix 13)

The safety device for the high-pressure gas tank according to any one of appendices 1 to 12, further comprising a protector that is formed in a plate with a plurality of holes or in a grid and that covers the heat pipe.

### (Appendix 14)

The safety device for the high-pressure gas tank according to any one of appendices 1 to 13, wherein:
the vehicle is a fuel cell vehicle that drives a motor for traveling by electric power of a fuel cell; and
the high-pressure gas tank is a hydrogen tank that receives therein hydrogen gas as the high-pressure gas.

### [Reference Signs List]

- 1: Safety valve
- 2: Vehicle (fuel cell vehicle)
- 3: High-pressure gas tank (hydrogen tank)
- 3A: First tank
- 3B: Second tank
- 3c: Middle portion
- 3d: Tank center (center of middle portion)
- 3f: End (front end, upper end)
- 3r: End (rear end, lower end)
- 4: Heat exchanger
- 5: Heat pipe
- 6: Housing
- 6a: Inlet port
- 6b: Outlet port
- 6c: Gas passage
- 6d: Discharge port
- 6e: Discharge passage
- 7: Collar
- 7a: Attachment portion
- 7b: Arm
- 8: Protector
- 9: Fan
- 10: Safety device (safety device for high-pressure gas tank)
- 11: Plunger
- 12: Cylinder (sensor)
- 13: Body
- 14: Cap
- 15: Housing hole (first connector)
- 16: Collar hole (second connector)
- 17: Mounting block
- 18: Spring
- 21: Cab
- 22: Chassis frame
- 23: Fuel cell
- 24: Motor
- 25: High-voltage battery
- 26: Side rail
- 27: Cross member
- 28: Gas supply pipe
- 29: Rear body
- 30: Tank box
- 31: Downstream pipe
- 32: Side cover
- 34: Front wheel
- 35: Rear wheel
- 37: Outer surface
- 38: Mount
- 39: Stay
- 51: Main pipe
- 52: Common pipe
- D1: Vehicle length direction (front-rear direction)
- D2: Vehicle width direction (right-left direction)
- D3: Vehicle height direction (up-down direction)

## Claims

1. A safety device for a high-pressure gas tank that receives therein high-pressure gas as fuel for a vehicle, the safety device comprising:
a safety valve that is attached to the high-pressure gas tank and discharges the high-pressure gas from an inside of the high-pressure gas tank to an outside in response to a temperature rise; and
a heat pipe that is connected to the safety valve and transfers heat by evaporation and condensation of a working fluid contained therein and by capillary action of a wick provided on an inner wall thereof.

2. The safety device for the high-pressure gas tank according to claim 1, wherein:
the high-pressure gas tank has a middle portion in a cylindrical shape and a pair of ends formed on both sides of the middle portion and each in a hemispherical shape;
the safety valve is attached to at least one of the ends; and
the heat pipe includes a main pipe extending along the middle portion from the safety valve attached to the end.

3. The safety device for the high-pressure gas tank according to claim 2, wherein:
the high-pressure gas tank is mounted on the vehicle in a posture in which a center of the middle portion extends horizontally; and
the main pipe extends downward from the safety valve attached to the end and further extends along the middle portion.

4. The safety device for the high-pressure gas tank according to claim 2, wherein:
the high-pressure gas tank is mounted on the vehicle in a posture in which a center of the middle portion extends vertically;
the safety valve is attached to the end on an upper side; and
the main pipe extends obliquely downward from the safety valve attached to the end and further extends along the middle portion.

5. The safety device for the high-pressure gas tank according to claim 1, wherein:
the high-pressure gas tank is installed behind a cab of the vehicle and outside in a vehicle width direction of a chassis frame; and
the heat pipe is provided in a space between the chassis frame and the high-pressure gas tank.

6. The safety device for the high-pressure gas tank according to claim 1, wherein:
the high-pressure gas tank is installed between a cab and a rear body of the vehicle; and
the heat pipe is provided in a space between the rear body and the high-pressure gas tank.

7. The safety device for the high-pressure gas tank according to claim 1, comprising a plurality of the safety valves respectively attached to a plurality of the high-pressure gas tanks, wherein
the heat pipe includes a common pipe connected in a thermally conductive manner to each of the safety valves.

8. The safety device for the high-pressure gas tank according to claim 7, wherein the common pipe extends along a gas supply pipe connected to the plurality of the high-pressure gas tanks to feed the high-pressure gas to a predetermined supply destination.

9. The safety device for the high-pressure gas tank according to claim 7, wherein the common pipe extends along a vehicle height direction and is connected in a thermally conductive manner to each of the safety valves respectively attached to the high-pressure gas tanks distributed in the vehicle height direction.

10. The safety device for the high-pressure gas tank according to claim 7, wherein the common pipe extends along a vehicle width direction and is connected in a thermally conductive manner to each of the safety valves respectively attached to the high-pressure gas tanks distributed in the vehicle width direction.

11. The safety device for the high-pressure gas tank according to claim 1, wherein:
the safety valve includes a sensor that opens a discharge port for discharging the high-pressure gas to the outside in response to a temperature rise, a housing that houses the sensor, and a first connector which is a hole or a channel formed in a portion of the housing adjacent to the sensor; and
the heat pipe is connected to the first connector.

12. The safety device for the high-pressure gas tank according to claim 1, wherein
the safety valve includes a sensor that opens a discharge port for discharging the high-pressure gas to the outside in response to a temperature rise, and a housing that houses the sensor,
the safety device further comprising a collar that is attached to the housing and formed of a material having a thermal conductivity higher than that of the housing, and that includes a second connector which is a hole or a channel formed at a position adjacent to the sensor, wherein
the heat pipe is connected to the second connector.

13. The safety device for the high-pressure gas tank according to claim 1, further comprising a protector that is formed in a plate with a plurality of holes or in a grid and that covers the heat pipe.

14. The safety device for the high-pressure gas tank according to claim 1, wherein:
the vehicle is a fuel cell vehicle that drives a motor for traveling by electric power of a fuel cell; and
the high-pressure gas tank is a hydrogen tank that receives therein hydrogen gas as the high-pressure gas.
